# FASCICULE DE BREVET EUROPEEN

(11) **EP 2 643 579 B1**
(45) Date de publication et mention de la délivrance du brevet: **10.09.2014**
(21) Numéro de dépôt: 11794549.3
(22) Date de dépôt: 14.11.2011
(51) Int. Cl.: F02K 7/16

(54) **PROPULSEUR COMBINE TURBOREACTEUR ET STATOREACTEUR**
KOMBINATION AUS EINEM TURBOLUFTSTRAHLTRIEBWERK UND STAUSTRAHLTRIEBWERK
COMBINED TURBOJET AND RAMJET ENGINE

(30) Priorité: 23.11.2010 FR 1059630
(43) Date de publication de la demande: 02.10.2013
(73) Titulaire: Snecma, 75015 Paris (FR)
(72) Inventeur: CONRARDY, Jean-Marie, F-27940 Courcelles Sur Seine (FR); SOULIER, Nicolas, F-27600 Fontaine Bellenger (FR)
(74) Mandataire: Thévenet, Jean-Bruno
(86) Numéro de dépôt international: PCT/FR2011/052630
(87) Numéro de publication internationale: WO 2012/069729

(56) Documents cités:
- EP-A1- 0 362 054
- EP-A1- 0 388 613
- EP-A1- 0 403 372
- JP-A- 11 107 857

## Description

La présente invention a pour objet un propulseur combiné turboréacteur et statoréacteur comprenant un carter externe, un corps central relié audit carter externe par des bras structuraux et formant avec celui-ci une manche d'entrée d'air et une veine de passage d'air, au moins un premier étage de compresseur d'air comprenant une première turbine disposée dans ledit corps central et un premier rotor à aubes disposées dans ladite veine de passage d'air et pouvant être sélectivement entraînées par ladite première turbine pour le fonctionnement du propulseur en turboréacteur et être mises en drapeau pour le fonctionnement du propulseur en statoréacteur.

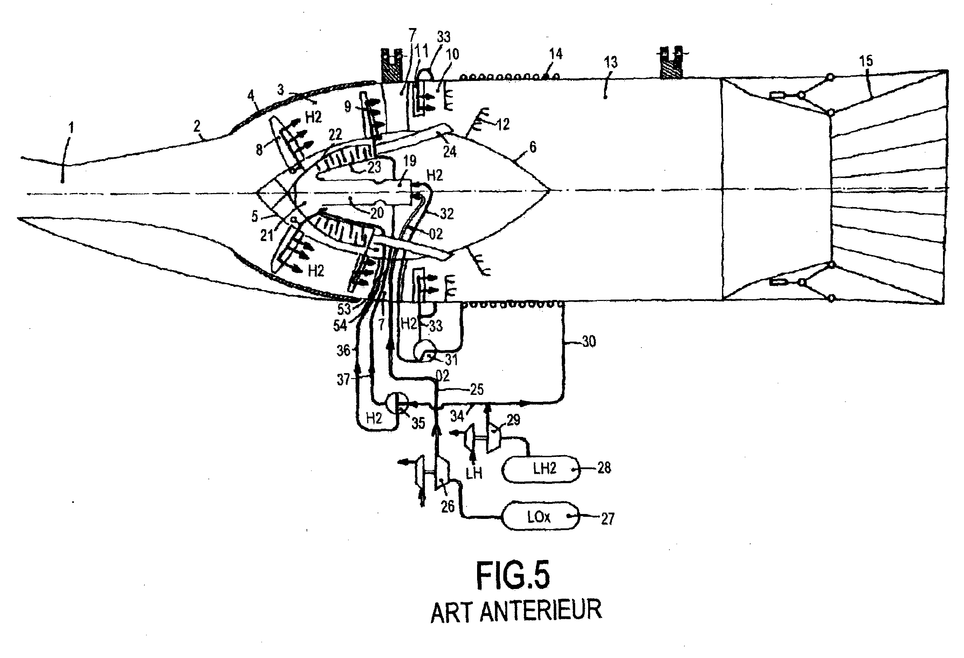

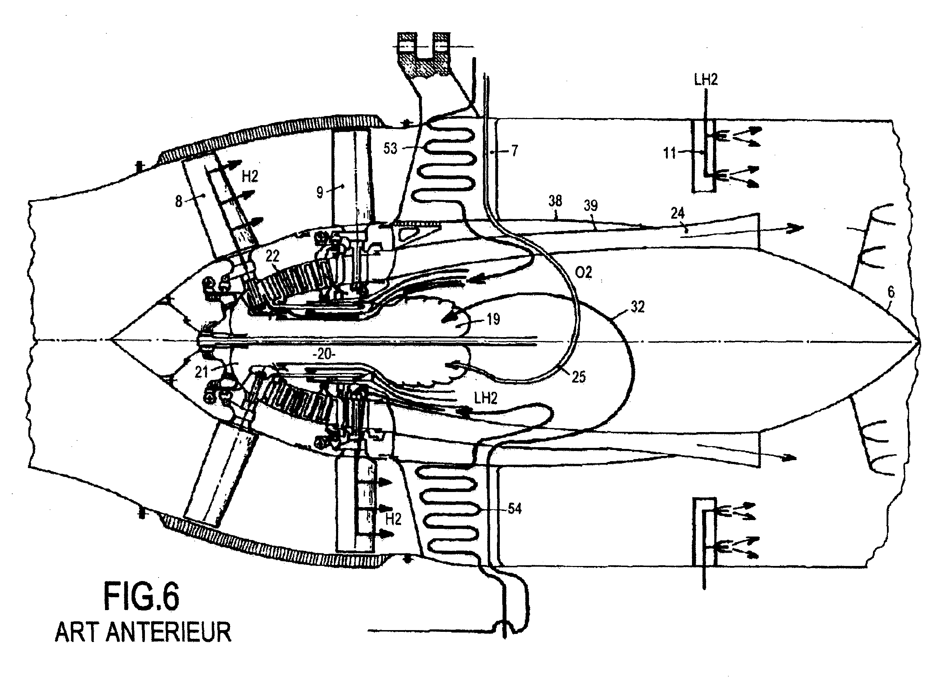

On connaît déjà par le document EP 0 403 372 B1 un propulseur combiné turbofusée statoréacteur à post-combustion du type représenté sur les figures 5 et 6.

Un tel propulseur combiné connu comprend une manche d'entrée d'air bidimensionnelle 1 à section variable suivie d'une section 2 à transition de forme qui permet une jonction avec une veine annulaire 3 formée entre un carter externe 4 et un corps central 5 de forme ogivale qui est relié au carter externe 4 par des bras structuraux 7 disposés transversalement par rapport à la veine annulaire 3. En aval des bras 7, au niveau de la partie arrière conique 6 du corps central 5, il est défini une zone de combustion 10 dans laquelle sont disposés des injecteurs de carburant 11 pour le fonctionnement du propulseur en statoréacteur et un système de post-combustion 12 comportant des anneaux accroche-flamme portés par le cône aval 6.

La zone de combustion 10 est suivie par une tuyère 13 dont la structure du carter comporte un échangeur de chaleur 14 apte à apporter de l'énergie au carburant liquide avant son utilisation et à refroidir la paroi de cette tuyère qui est suivie d'une tuyère d'éjection 15 convergente-divergente à section variable.

Sur la figure 5, on voit de façon schématique un générateur de gaz 19 alimenté par l'aval en ergols liquides pour générer des gaz de combustion vers l'amont dans une chambre centrale d'éjection fixe 20, en direction d'une chambre amont annulaire 21, dans laquelle les gaz du moteur-fusée sont forcés vers une turbine de puissance subsonique formée de deux modules contrarotatifs 22, 23 imbriqués qui sont liés respectivement à un module amont 8 et un module aval 9 du compresseur.

Après avoir entraîné les turbines 22, 23, les gaz du générateur 19 sont éjectés dans la veine d'air comprimé au niveau de la zone de combustion 10 par des canaux longitudinaux 24 qui traversent la paroi du corps central 5.

Le générateur de gaz 19 est alimenté, par une canalisation 25, en oxygène pompé par une turbopompe 26 dans un réservoir 27, et, par une canalisation 32, en hydrogène pompé par une turbopompe 29 dans un réservoir 28. L'hydrogène pompé par la turbopompe 29 sert d'abord à alimenter, par une première branche 30, l'échangeur de chaleur 14 où l'hydrogène passe sous forme gazeuse avant d'alimenter le générateur de gaz 19 par la canalisation 32 pour le fonctionnement en turbo-fusée, ou les injecteurs 11 par une canalisation 33 pour le fonctionnement en statoréacteur. Une vanne deux voies 31 est située en sortie de l'échangeur 14 en entrée des canalisations 32 et 33.

L'hydrogène pompé par la turbopompe 29 alimente en outre par une deuxième branche 34 et une vanne trois voies 35 deux circuits de refroidissement 36, 37 pour refroidir les pales des rotors des modules amont 8 et aval 9 du compresseur. Des échangeurs de chaleur 53 et 54 sont disposés dans les circuits de refroidissement 36, 37 pour assurer un premier réchauffement de l'hydrogène liquide.

Ainsi, dans ce type de propulseur combiné connu, pour le cycle turboréacteur, on utilise un cycle à générateur de gaz alimenté en hydrogène et oxygène, les gaz issus du générateur permettant d'alimenter une turbine contrarotative subsonique qui entraîne les deux étages du compresseur. Pour le fonctionnement en statoréacteur à partir d'une certaine vitesse, le générateur de gaz est arrêté, les aubes des modules amont et aval du compresseur sont mises en drapeau et seule la post-combustion fonctionne.

L'utilisation d'un cycle à générateur de gaz implique d'embarquer de l'oxygène liquide pour la phase de fonctionnement en turboréacteur. Ceci présente un inconvénient puisque cela implique des mesures de sécurité particulières et augmente la masse embarquée. Les turbines employées qui sont entraînées par les gaz chauds issus du générateur de gaz, sont de type subsonique et ne présentent pas un fonctionnement optimisé. Par ailleurs, les aubes des rotors du compresseur sont refroidies à mach élevé par transpiration d'hydrogène qui est éjecté des aubes dans la partie compression et peut ainsi entraîner des combustions dégradées.

On connaît encore un propulseur turbostatoréacteur à cycle expanseur qui a fait l'objet d'un démonstrateur dénommé ATREX ("Air Turbo Ramjet Expander Cycle") développé par l'agence japonaise JAXA, mais dont le développement a ensuite été abandonné.

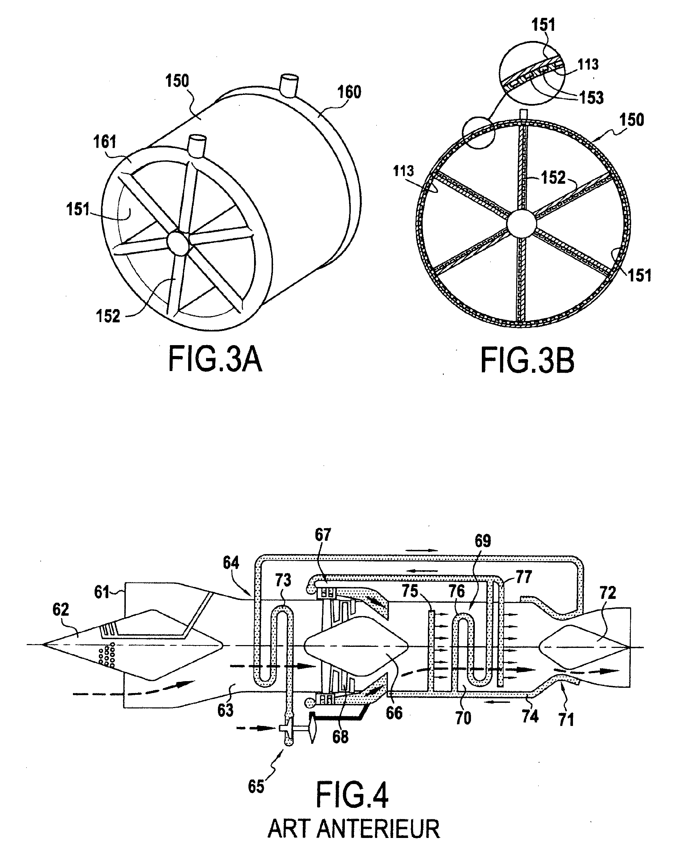

Le schéma de principe de ce type de turbostatoréacteur est représenté sur la figure 4. La turbopompe 65 du circuit d'alimentation en hydrogène et la turbine 67 du turbomoteur sont entraînées par la détente de l'hydrogène liquide.

La turbine 67 de ce moteur est disposée à la périphérie de la grille 68 des aubes de compresseur tournant de façon non contrarotative autour d'un corps central 66 en forme d'ogive. La turbine 67 est alimentée par de l'hydrogène réchauffé à travers des échangeurs amont 64 et aval 69. La turbine 67 entraîne la grille d'aubes de compresseur 68 qui comprime l'air introduit par une section d'entrées 61 dans la veine d'air 63 et refroidi par l'échangeur amont 64 qui constitue un prérefroidisseur situé en amont de la turbine 67.

La combustion est de type post-combustion qui, outre la génération de la poussée, fournit l'énergie d'entraînement de la turbine 67 au travers de l'échangeur aval 69. La turbine 67 est de type supersonique. La pression d'alimentation de la turbine 67 est obtenue grâce à la turbopompe 65 à turbine froide qui est alimentée par l'hydrogène régénéré.

Sur la figure 4, on voit un corps ogival 62 définissant une entrée d'air 61 annulaire de section variable, le prérefroidisseur 64, le corps central ogival 66 autour duquel tournent la turbine 67 et la grille 68 d'aubes de compresseur, une chambre de combustion 70 avec un premier dispositif d'injection 75, l'échangeur de chaleur aval 69 et un deuxième dispositif d'injection 77. Une tuyère convergente-divergente 71 avec un corps central ogival 72 permet l'éjection des gaz en aval de la chambre de combustion 70. L'hydrogène liquide pompé par la turbopompe 65 et provenant d'un réservoir non représenté circule d'abord dans un tronçon 73 faisant partie du prérefroidisseur 64, puis circule dans un tronçon 74 de la paroi de la tuyère convergente-divergente 71 pour refroidir cette paroi et continuer de se réchauffer, avant d'être appliqué au premier dispositif d'injection 75 et au circuit 76 de l'échangeur de chaleur aval 69 qui débouche dans le deuxième dispositif d'injection 77. L'échangeur de chaleur aval 69 peut être intégré dans une matrice carbone-carbone.

La turbine froide de la turbopompe 65 reçoit de l'hydrogène qui a été réchauffé dans le prérefroidisseur 64 et la paroi de la tuyère aval mais n'a pas transité par l'échangeur de chaleur aval 69. Au contraire, la turbine 67 est alimentée par de l'hydrogène qui a été également réchauffé dans l'échangeur de chaleur aval 69.

L'utilisation d'un échangeur de chaleur ou prérefroidisseur 64 en entrée d'air permet de refroidir le compresseur, mais génère de la formation de glace due à la régénération d'hydrogène liquide avec de l'air ambiant. De plus, le fait que l'échangeur aval 69 soit intégré dans une structure carbone-carbone ne permet pas d'optimiser ses performances. Enfin, le concept de turbine 67 (dit "Tip turbine") disposée à l'extérieur de la grille 68 d'aubes de compresseur conduit à des hauteurs d'aubes très faibles et à des contraintes mécaniques élevées du fait de l'importance de la vitesse périphérique.

La présente invention a pour but de remédier aux inconvénients précités des moteurs combinés connus et notamment d'éviter l'utilisation d'oxygène liquide et de permettre une réalisation compacte dont la structure est simplifiée, la masse est réduite et les performances sont améliorées.

Ces buts sont atteints conformément à l'invention, grâce à un propulseur combiné turboréacteur et statoréacteur comprenant un carter externe, un corps central relié audit carter externe par des bras structuraux et formant avec celui-ci une manche d'entrée d'air et une veine de passage d'air, au moins un premier étage de compresseur d'air comprenant une première turbine disposée dans ledit corps central et un premier rotor à aubes disposées dans ladite veine de passage d'air et pouvant être sélectivement entraînées par ladite première turbine pour le fonctionnement du propulseur en turboréacteur et être mises en drapeau pour le fonctionnement du propulseur en statoréacteur, caractérisé en ce qu'il comprend en outre une turbopompe comprenant une pompe qui est alimentée en hydrogène liquide à partir d'un réservoir d'hydrogène pour injecter l'hydrogène dans un réchauffeur disposé dans ledit carter externe en aval dudit corps central, et une turbine subsonique d'entraînement de ladite pompe qui reçoit l'hydrogène collecté en sortie du réchauffeur et partiellement détendu, l'hydrogène partiellement détendu dans la turbine subsonique étant appliqué à ladite première turbine qui est une turbine supersonique, pour le fonctionnement du propulseur en turboréacteur, l'hydrogène issu de la première turbine supersonique étant ensuite collecté dans des premières tubulures à l'intérieur dudit corps central pour être envoyé dans la chambre de combustion définie à l'intérieur du carter en aval dudit corps central, tandis que l'hydrogène partiellement détendu dans la turbine subsonique est envoyé directement dans ladite chambre de combustion par des injecteurs pour le fonctionnement du propulseur en statoréacteur.

Avantageusement, le propulseur combiné comprend en outre des moyens de prélèvement d'une fraction de l'hydrogène issu de la première turbine supersonique, des moyens d'introduction de cette fraction d'hydrogène dans des premiers canaux internes ménagés dans les aubes du premier rotor et des moyens d'évacuation de cette fraction d'hydrogène vers ladite chambre de combustion à travers lesdites premières tubulures après passage dans lesdits premiers canaux internes.

Selon un mode de réalisation particulier, le propulseur combiné comprend en outre un deuxième étage de compresseur d'air comprenant une deuxième turbine supersonique disposée dans ledit corps central et un deuxième rotor à aubes contrarotatives disposées dans ladite veine de passage d'air et pouvant être sélectivement entraînées par ladite deuxième turbine pour le fonctionnement du propulseur en turboréacteur et être mises en drapeau pour le fonctionnement du propulseur en statoréacteur, ladite deuxième turbine recevant également de l'hydrogène partiellement détendu dans la turbine subsonique et l'hydrogène issu de la deuxième turbine supersonique étant ensuite collecté dans des deuxièmes tubulures à l'intérieur dudit corps central pour être envoyé dans ladite chambre de combustion pour le fonctionnement du propulseur en turboréacteur.

Dans ce cas, selon un aspect avantageux de l'invention, le propulseur combiné peut en outre comprendre des moyens de prélèvement d'une fraction de l'hydrogène issu de la deuxième turbine supersonique, des moyens d'introduction de cette fraction d'hydrogène dans des deuxièmes canaux internes ménagés dans les aubes du deuxième rotor et des moyens d'évacuation de cette fraction d'hydrogène vers ladite chambre de combustion à travers lesdites deuxième tubulures après passage dans lesdits deuxième canaux internes.

Le propulseur combiné comprend un dispositif de post-combustion avec des anneaux accroche-flamme disposés dans ladite chambre de combustion entre une partie arrière du corps central et une partie du carter externe contenant ledit réchauffeur.

Le réchauffeur peut comprendre un échangeur à parois et ailettes régénératrices.

A titre d'exemple, le réchauffeur peut comprendre un échangeur à parois à canaux fraisés et en matériau à base de cuivre et de nickel haute température.

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique en coupe axiale d'un premier mode de réalisation d'un propulseur combiné selon l'invention à cycle expanseur avec deux turbines supersoniques d'alimentation de deux rotors contrarotatifs de compresseur,
- la figure 2 est une vue schématique en coupe axiale d'un deuxième mode de réalisation d'un propulseur combiné selon l'invention à cycle expanseur avec une seule turbine supersonique d'alimentation d'un rotor de compresseur,
- la figure 3A est une vue en perspective d'un tronçon d'échangeur de chaleur utilisable dans le cadre de la présente invention,
- la figure 3B est une section du tronçon d'échangeur de chaleur de la figure 3A, selon la ligne III B - III B de la figure 1,
- la figure 4 est une vue schématique en coupe axiale d'un turbostatoréacteur à cycle expanseur connu du type ATREX,
- la figure 5 est une vue schématique en coupe axiale, d'un propulseur combiné turbo-fusée statoréacteur connu, et
- la figure 6 est une vue en coupe axiale d'un exemple particulier de réalisation du propulseur combiné turbo-fusée statoréacteur connu de la figure 5.

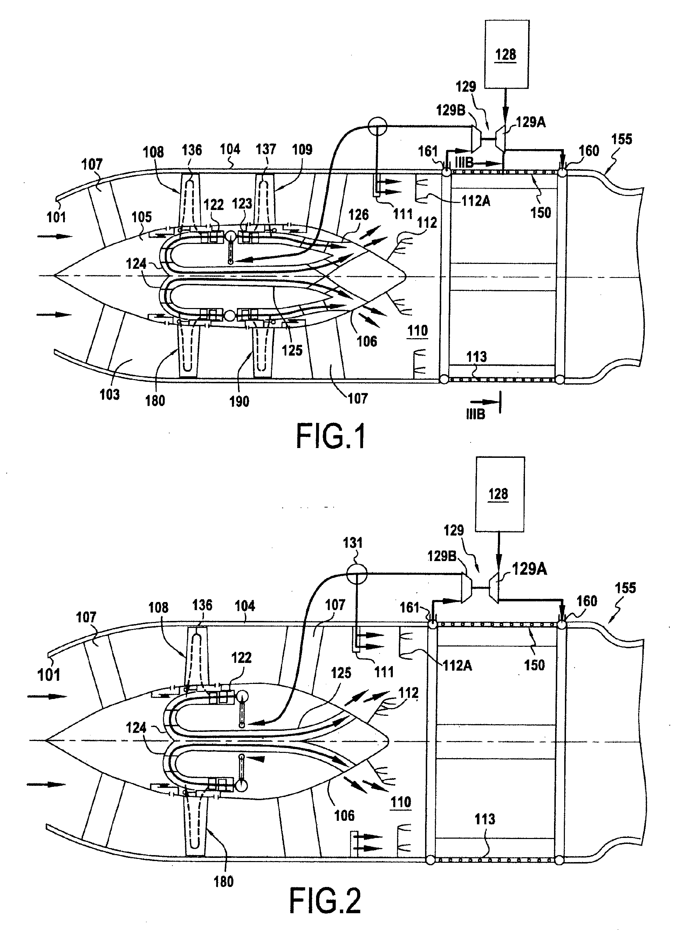

Si l'on se reporte à la figure 1, on voit un exemple de propulseur combiné turboréacteur statoréacteur à cycle expanseur selon l'invention.

Le propulseur combiné comprend un carter externe 104 à l'intérieur duquel est disposé un corps central 105 de forme essentiellement ogivale qui est relié au carter externe 104 par des bras structuraux 107 transversaux régulièrement répartis autour du corps central 105. Dans le cas de la figure 1 on a représenté une première série de bras 107 pour supporter la partie amont du corps central 105 et une deuxième série de bras 107 pour supporter la partie aval 106 du corps central 105, de manière à mieux répartir les efforts. Toutefois, on pourrait aussi n'avoir qu'une série de bras structuraux 107 soutenant la partie centrale du corps central 105.

Une veine d'air annulaire 103 est formée entre le corps central 105 et le carter externe 107. Une manche d'entrée d'air 101 permet l'introduction de l'air extérieur ambiant dans la veine d'air 103.

Des premier et deuxième étages de compresseur d'air avec des premier et deuxième rotors 108, 109 à aubes contrarotatives 180, 190 sont disposés dans la veine de passage d'air 103 entre les première et deuxième séries de bras structuraux 107 situés respectivement dans la partie amont et la partie aval 106 du corps central 105.

En phase de fonctionnement en turboréacteur, les premiers et deuxième rotors 108, 109 sont entraînés en rotation dans des sens opposés autour du corps central 105 à l'aide de première et deuxième turbines supersoniques 122, 123 positionnées dans le moyeu des grilles d'aubes de compresseur constituant les premier et deuxième rotors 108, 109.

En phase de fonctionnement en statoréacteur, les aubes 180 et 190 des rotors 108 et 109 sont mises en drapeau.

Une turbopompe 129 comprend une pompe 129A qui est alimentée en hydrogène liquide à partir d'un réservoir d'hydrogène 128 pour injecter l'hydrogène dans un réchauffeur 150 disposé dans le carter externe 104 en aval du corps central 105. La turbopompe 129 comprend en outre une turbine subsonique 129B qui sert à l'entraînement de la pompe 129A et reçoit l'hydrogène partiellement détendu qui est collecté en sortie du réchauffeur150.

En phase de fonctionnement en turboréacteur, l'hydrogène partiellement détendu dans la turbine subsonique 129B est appliqué aux turbines supersoniques 122, 123 après avoir suivi un trajet qui passe le long d'au moins l'un des bras structuraux aval 107 pour pénétrer dans le corps central 105 et alimenter une tubulure annulaire d'injection d'hydrogène à l'entrée de chacune des turbines supersoniques 122, 123.

L'hydrogène issu de la turbine supersonique 122 située en amont est collecté dans une tubulure 124 qui ramène le flux d'hydrogène dans l'axe du propulseur, puis le renvoie à travers une tubulure longitudinale centrale 125 vers la partie aval 106 du corps central pour qu'il soit évacué par une sortie annulaire dans la chambre de combustion 110 définie à l'intérieur du carter 104 en aval du corps central 105.

Une vanne trois-voies 131 ou un raccord en T est disposé sur le trajet de l'hydrogène entre la sortie de la turbine subsonique 129B et l'entrée à l'intérieur du carter externe 104 pour permettre, lors du fonctionnement du propulseur en statoréacteur, de renvoyer l'hydrogène partiellement détendu dans la turbine subsonique 129B, directement dans la chambre de combustion 110 à travers des injecteurs 111 disposés au voisinage de l'extrémité aval 106 du corps central 105.

Des anneaux accroche-flamme 112, 112A sont disposés dans la chambre de combustion 110 entre la partie aval 106 du corps central 105 et la partie 113 du carter 104 contenant le réchauffeur150. Ces anneaux peuvent être fixés sur la paroi du carter 104 (anneaux 112A) ou sur la partie aval 106 du corps central 105 (anneaux 112).

L'hydrogène issu de la turbine supersonique 123 située en aval est collecté par des tubulures 126 qui s'étendent essentiellement longitudinalement vers l'aval du corps central 105 et débouchent dans la chambre de combustion 110 par une sortie annulaire qui peut être confondue ou non avec la sortie annulaire des tubulures recevant l'hydrogène ayant circulé dans la tubulure longitudinale centrale 125 après passage dans la turbine supersonique amont 122.

En résumé, lorsque le propulseur combiné de la figure 1 fonctionne en turboréacteur selon un cycle expanseur, il est effectué une alimentation en série d'hydrogène à travers la turbine subsonique 129B associée à la pompe 129A d'alimentation en hydrogène et à travers les turbines supersoniques 122, 123 associées aux deux étages de rotors à aubes 108, 109 contrarotatifs.

De façon plus particulière, en sortie de la pompe à hydrogène 129A, l'hydrogène est injecté dans un réchauffeur 150 positionné dans la paroi 113 du carter externe 104, à la suite de la chambre de combustion 110.

L'hydrogène collecté en sortie du réchauffeur 150 est partiellement détendu dans la turbine subsonique 129B servant à alimenter la pompe 129A.

L'hydrogène issu de la turbine subsonique 129B est transféré vers les turbines supersoniques 122, 123 où il est détendu pour entraîner les rotors à aubes contrarotatifs 108, 109, chaque turbine 122, respectivement 123 étant associée à un étage de rotor 108 respectivement 109.

L'hydrogène issu des turbines supersoniques 122, 123 est ensuite collecté dans les turbines 124, 125 et 126 pour être envoyé dans la chambre de combustion 110.

Dans ce contexte, on notera que le moteur hypersonique combiné selon l'invention n'utilise comme carburant que de l'hydrogène liquide et il n'est donc pas nécessaire d'embarquer un réservoir de LOX ni de mettre en oeuvre de turbopompe pour le LOX.

Aucun échangeur de chaleur n'est positionné au niveau du corps central 105 en amont de la chambre de combustion 110, de sorte qu'il n'existe pas de risque de givrage en entrée d'air. Le réchauffeur 150 qui est le seul échangeur de chaleur est lui-même positionné dans la zone de post-combustion, juste en aval de la chambre de combustion proprement dite 110.

Toute l'énergie nécessaire au fonctionnement du moteur est obtenue par la régénération de l'hydrogène.

Les turbines supersoniques 122, 123 sont très peu contraintes en température et n'ont pas besoin de refroidissement. Seules les aubes 180, 190 des rotors 108, 109 du compresseur sont refroidies par des circulations d'hydrogène dans des canaux représentés par des traits en pointillés 136, 137 sur la figure 1, et l'hydrogène ayant parcouru les aubes 180, 190 est ensuite renvoyé dans les tubulures 124, 125 ou 126 pour être ensuite rejeté à la partie aval 106 du corps central 105, dans la zone de combustion ou post-combustion 110.

On notera que le démarrage du moteur est très simple. Il n'exige pas de démarreur spécial et s'effectue sur l'inertie de l'échangeur de chaleur 150.

Un moteur selon l'invention permet d'obtenir de très grandes performances, avec un fonctionnement pouvant très préférentiellement aller jusqu'à environ Mach 5.

L'impulsion spécifique ISP peut ainsi être par exemple de l'ordre de 4000 s contre 3000 s pour un moteur à réaction classique brûlant du kérosène. On peut même obtenir par exemple une ISP de l'ordre de 7000 s avec un turboréacteur brûlant de l'hydrogène à Mach 0,8. Dans un fonctionnement en statoréacteur, le cycle du moteur combiné de la figure 1 est le suivant :
Les aubes 180, 190 des grilles 108, 109 du compresseur sont mises en drapeau.

En sortie de la pompe d'hydrogène 129A, l'hydrogène est injecté dans le réchauffeur 150 positionné à la suite de la chambre de combustion 110, puis l'hydrogène est collecté en sortie du réchauffeur 150 pour être partiellement détendu dans la turbine subsonique 129B d'entraînement de la pompe 129A (comme dans le positionnement en turboréacteur).

Ensuite, la vanne trois-voies 131 change de position par rapport au fonctionnement en turboréacteur, de telle sorte que l'hydrogène collecté en sortie de la turbine subsonique 129B est envoyé dans les injecteurs 111 pour être injecté directement dans la chambre de combustion 110, sans passer par les turbines supersoniques 122, 123 qui sont alors contournées. La quasi-totalité de l'hydrogène est ainsi envoyée dans la chambre de combustion 110. Toutefois, une faible proportion d'hydrogène peut néanmoins être prélevée au niveau de la vanne trois-voies 131 pour continuer d'alimenter les circuits de refroidissement des aubes 180, 190 (chemins de circulation 136, 137 de la figure 1), cette faible proportion d'hydrogène étant ensuite renvoyée dans la chambre de combustion 110 à travers les tubulures 124, 125 ou 126 comme précédemment indiqué.

Le mode de réalisation de la figure 1 avec deux turbines supersoniques 122, 123 basse vitesse à injection partielle pour l'entraînement du compresseur à aubes permet d'obtenir un taux de détente élevé avec un nombre réduit d'étages 108, 109 et les turbines supersoniques 122, 123 étant positionnées dans le moyeu central des grilles du compresseur, le propulseur combiné présente à la fois une masse réduite et une réalisation simplifiée.

La figure 2 montre un autre exemple de réalisation possible d'un propulseur combiné selon l'invention, qui offre des performances légèrement inférieures à celles du mode de réalisation de la figure 1, notamment en termes de poussée, mais qui présente une structure simplifiée.

Dans le mode de réalisation de la figure 2, le compresseur d'air comprend un seul étage 108 de grilles à aubes 180, de sorte qu'il n'est plus nécessaire de mettre en oeuvre qu'une seule turbine supersonique 122.

La structure et le fonctionnement du propulseur combiné de la figure 2 sont analogues à ceux de la figure 1, aussi bien en mode turboréacteur, qu'en mode statoréacteur, et les éléments communs portent les mêmes numéros de référence et ne seront pas décrits à nouveau. La seule différence réside dans la suppression d'un rotor de compresseur et de la turbine supersonique associée.

Sur la figure 2, on a représenté une turbine supersonique 122 pour laquelle l'injection d'hydrogène est réalisée en aval de celle-ci, c'est-à-dire que la seule turbine supersonique correspond à la turbine supersonique amont 122 de la figure 1 et le rotor de compresseur 108 correspond également à l'étage amont 108 de compresseur du mode de réalisation de la figure 1.

A titre de variante, il serait cependant possible de mettre en oeuvre une seule turbine supersonique qui serait constituée par la turbine supersonique aval 123 de la figure 1, avec une injection d'hydrogène en amont de celle-ci. Une telle variante de réalisation comprendrait ainsi la turbine supersonique aval 123 de la figure 1 et l'étage 109 de grille de compresseur, ainsi que les tubulures 126 d'évacuation de l'hydrogène, tandis que la turbine supersonique amont 122, l'étage 108 de grille de compresseur et les tubulures 124, 125 d'évacuation de l'hydrogène seraient supprimés.

Les figures 3A et 3B montrent un exemple particulier de réalisation de l'échangeur de chaleur 150 disposé dans la paroi 113 du carter 104 en aval de la chambre de combustion 110. Les figures 3A et 3B montrent un tronçon 150 d'échangeur thermique comprenant une paroi cylindrique interne 151 régénératrice et des ailettes 152 également régénératrices, qui s'étendent radialement sur toute la longueur de l'échangeur.

L'échangeur thermique peut ainsi être réalisé selon les techniques similaires à celles employées dans les parois des divergents des moteurs-fusées, en utilisant par exemple des canaux fraisés 153 et des matériaux à base de cuivre, de nickel haute température ou encore à base de fer, aussi bien pour la paroi cylindrique 150 que pour les ailettes 152.

Les figures 1 et 2 montrent à titre d'exemple l'intégration de l'échangeur de chaleur particulier 150 des figures 3A et 3B dans la paroi 113 de la chambre de post-combustion située en aval de la chambre de combustion 110, mais d'autres formes d'échangeur de chaleur sont naturellement possibles.

Comme on peut le voir sur les figures 3A et 3B, l'échangeur 150 est constitué d'une partie cylindrique 151 régénératrice et de plusieurs ailettes 152 régénératrices. La peau intérieure de la partie cylindrique 151 constitue la paroi 113 de la chambre de post-combustion. Les canaux longitudinaux 153 ménagés dans les parois régénératrices 151 et 152 sont connectés de part et d'autre dans le sens axial d'une part à un collecteur d'entrée 160 et d'autre part à un collecteur de sortie 161.

Le collecteur de sortie 161 est lié mécaniquement au carter 104 en aval de la chambre de combustion 110 tandis que le collecteur d'entrée 160 est lié mécaniquement à une tuyère d'éjection 155 convergente-divergente qui constitue la partie aval du propulseur combiné (voir les figures 1 et 2).

## Revendications

1. Propulseur combiné turboréacteur statoréacteur comprenant un carter externe (104), un corps central (105) relié audit carter externe (104) par des bras structuraux (107) et formant avec celui-ci une manche d'entrée d'air (101) et une veine de passage d'air (103), au moins un premier étage de compresseur d'air comprenant une première turbine (122) disposée dans ledit corps central (105) et un premier rotor (108) à aubes (180) disposées dans ladite veine de passage d'air (103) et pouvant être sélectivement entraînées par ladite première turbine (122) pour le fonctionnement du propulseur en turboréacteur et être mises en drapeau pour le fonctionnement du propulseur en statoréacteur,
**caractérisé en ce qu'**il comprend en outre une turbopompe (129) comprenant une pompe (129A) qui est alimentée en hydrogène liquide à partir d'un réservoir d'hydrogène (128) pour injecter l'hydrogène dans un réchauffeur (150) disposé dans ledit carter externe (104) en aval dudit corps central (105) et une turbine subsonique (129B) d'entraînement de ladite pompe (129A), qui reçoit l'hydrogène collecté en sortie du réchauffeur (150) et partiellement détendu, l'hydrogène partiellement détendu dans la turbine subsonique (129B) étant appliqué à ladite première turbine (122), qui est une turbine supersonique, pour le fonctionnement du propulseur en turboréacteur, l'hydrogène issu de la première turbine supersonique (122) étant ensuite collecté dans des premières tubulures (124, 125) à l'intérieur dudit corps central (105) pour être envoyé dans la chambre de combustion (110) définie à l'intérieur du carter (104) en aval dudit corps central (105), tandis que l'hydrogène partiellement détendu dans la turbine subsonique (129B) est renvoyé directement dans ladite chambre de combustion (110) par des injecteurs (111) pour le fonctionnement du propulseur en statoréacteur.

2. Propulseur combiné selon la revendication 1, **caractérisé en ce qu'**il comprend en outre un deuxième étage de compresseur d'air comprenant une deuxième turbine supersonique (123) disposée dans ledit corps central (105) et un deuxième rotor (109) à aubes (190) contrarotatives disposées dans ladite veine de passage d'air (103) et pouvant être sélectivement entraînées par ladite deuxième turbine (123) pour le fonctionnement du propulseur en turboréacteur et être mises en drapeau pour le fonctionnement du propulseur en statoréacteur, ladite deuxième turbine (123) recevant également de l'hydrogène partiellement détendu dans la turbine subsonique (129B) et l'hydrogène issu de la deuxième turbine supersonique (125) étant ensuite collecté dans des deuxièmes tubulures (126) à l'intérieur dudit corps central (105) pour être envoyé dans ladite chambre de combustion (110) pour le fonctionnement du propulseur en turboréacteur.

3. Propulseur combiné selon la revendication 1, **caractérisé en ce qu'**il comprend des moyens de prélèvement d'une fraction de l'hydrogène issu de la première turbine supersonique (122), des moyens d'introduction de cette fraction d'hydrogène dans des premiers canaux internes ménagés dans les aubes (180) du premier rotor (108) et des moyens d'évacuation de cette fraction d'hydrogène vers ladite chambre de combustion (110) à travers lesdites premières tubulures (124, 125) après passage dans lesdits premiers canaux internes.

4. Propulseur combiné selon les revendications 1 à 3, **caractérisé en ce qu'**il comprend en outre des moyens de prélèvement d'une fraction de l'hydrogène issu de la deuxième turbine supersonique (123), des moyens d'introduction de cette fraction d'hydrogène dans des deuxièmes canaux internes ménagés dans les aubes (190) du deuxième rotor (109) et des moyens d'évacuation de cette fraction d'hydrogène vers ladite chambre de combustion (110) à travers lesdites deuxièmes tubulures (126) après passage dans lesdits deuxièmes canaux internes.

5. Propulseur combiné selon l'une quelconque des revendications 1 à 4, **caractérisé en ce qu'**il comprend un dispositif de post-combustion avec des anneaux accroche-flamme (112, 112A) disposés dans ladite chambre de combustion (110) entre une partie arrière (106) du corps central (105) et une partie (113) du carter externe (104) contenant ledit réchauffeur (150).

6. Propulseur combiné selon l'une quelconque des revendications 1 à 5, **caractérisé en ce que** le réchauffeur (150) comprend un échangeur de chaleur à parois (151) et ailettes (152) régénératrices.

7. Propulseur combiné selon la revendication 6, **caractérisé en ce que** le réchauffeur (150) comprend un échangeur de chaleur à parois (151) à canaux fraisés (153) et un matériau à base de cuivre et de nickel haute température.

## Patentansprüche

1. Kombiniertes Turboreaktor-Statoreaktor-Triebwerk, umfassend ein externes Gehäuse (104), einen zentralen Körper (105), der mit dem externen Gehäuse (104) durch Strukturarme (107) verbunden ist und mit diesem einen Lufteintrittskanal (101) und ein Luftdurchgangsrohr (103) bildet, wobei mindestens eine erste Luftkompressorstufe eine erste Turbine (122), die in dem zentralen Körper (105) angeordnet ist, und einen ersten Rotor (108) mit Rotorblättern (180) umfasst, die in dem Luftdurchgangsrohr (103) angeordnet sind und selektiv von der ersten Turbine (122) für den Betrieb des Triebwerks als Turboreaktor angetrieben und für den Betrieb des Triebwerks als Statoreaktor in Segelflugstellung gebracht werden können,
**dadurch gekennzeichnet, dass** es ferner eine Turbopumpe (129) besitzt, umfassend eine Pumpe (129A), die mit flüssigem Wasserstoff von einem Wasserstoffbehälter (128) versorgt wird, um den Wasserstoff in eine Heizeinrichtung (150) einzuleiten, die in dem externen Gehäuse (104) stromabwärts zu dem zentralen Körper (105) angeordnet ist, und eine Unterschallturbine (129B) für den Antrieb der Pumpe (129A), die den am Ausgang der Heizeinrichtung (150) gesammelten und teilweise druckgeminderten Wasserstoff aufnimmt, wobei der teilweise druckgeminderte Wasserstoff in der Unterschallturbine (129B) an der ersten Turbine (122), die eine Unterschallturbine ist, für den Betrieb des Triebwerks als Turboreaktor angewandt wird, wobei der aus der ersten Unterschallturbine (122) kommende Wasserstoff sodann in ersten Rohrleitungen (124, 125) innerhalb des zentralen Körpers (105) gesammelt wird, um in die Verbrennungskammer (110) geschickt zu werden, die im Inneren des Gehäuses (104) stromabwärts zum zentralen Körper (105) definiert ist, während der teilweise druckgeminderte Wasserstoff in der Unterschallturbine (129B) durch Einspritzdüsen (111) direkt in die Verbrennungskammer (110) für den Betrieb des Triebwerks als Statoreaktor zurückgeschickt wird.

2. Kombiniertes Triebwerk nach Anspruch 1, **dadurch gekennzeichnet, dass** es ferner eine zweite Luftkompressorstufe besitzt, umfassend eine zweite Unterschallturbine (123), die in dem zentralen Körper (105) angeordnet ist, und einen zweiten Rotor (109) mit kontrarotierenden Rotorblättern (190), die in dem Luftdurchgangsrohr (103) angeordnet sind und selektiv von der zweiten Turbine (123) für den Betrieb des Triebwerks als Turboreaktor angetrieben werden können und für den Betrieb des Triebwerks als Statoreaktor in Segelflugstellung gebracht werden können, wobei die zweite Turbine (123) auch teilweise druckgeminderten Wasserstoff in der Unterschallturbine (129B) aufnimmt, wobei der aus der zweiten Unterschallturbine (125) kommende Wasserstoff sodann in zweiten Rohrleitungen (126) innerhalb des zentralen Körpers (105) gesammelt wird, um in die Verbrennungskammer (110) für den Betrieb des Triebwerks als Turboreaktor geschickt zu werden.

3. Kombiniertes Triebwerk nach Anspruch 1, **dadurch gekennzeichnet, dass** es Mittel zur Entnahme einer Wasserstofffraktion, die von der ersten Unterschallturbine (122) kommt, Mittel zur Einleitung dieser Wasserstofffraktion in erste innere Kanäle, die in den Rotorblättern (180) des ersten Rotors (108) ausgenommen sind, und Mittel zur Ableitung dieser Wasserstofffraktion zu der Verbrennungskammer (110) durch die ersten Rohrleitungen (124, 125) nach Durchlaufen der ersten inneren Kanäle umfasst.

4. Kombiniertes Triebwerk nach den Ansprüchen 1 bis 3, **dadurch gekennzeichnet, dass** es ferner Mittel zur Entnahme einer Wasserstofffraktion, die von der zweiten Unterschallturbine (123) kommt, Mittel zur Einleitung dieser Wasserstofffraktion in zweite innere Kanäle, die in den Rotorblättern (190) des zweiten Rotors (109) ausgenommen sind, und Mittel zur Ableitung dieser Wasserstofffraktion zu der Verbrennungskammer (110) durch die zweiten Rohrleitungen (126) nach Durchlaufen der zweiten inneren Kanäle umfasst.

5. Kombiniertes Triebwerk nach einem der Ansprüche 1 bis 4, **dadurch gekennzeichnet, dass** es eine Nachverbrennungseinrichtung mit Flammenhalterringen (112, 112A) umfasst, die in der Verbrennungskammer (110) zwischen einem hinteren Teil (106) des zentralen Körpers (105) und einem Teil (113) des externen Gehäuses (104), das die Heizeinrichtung (150) enthält, angeordnet sind.

6. Kombiniertes Triebwerk nach einem der Ansprüche 1 bis 5, **dadurch gekennzeichnet, dass** die Heizeinrichtung (150) einen Wärmetauscher mit regenerativen Wänden (151) und Rippen (152) umfasst.

7. Kombiniertes Triebwerk nach Anspruch 6, **dadurch gekennzeichnet, dass** die Heizeinrichtung (150) einen Wärmetauscher mit Wänden (151) mit gefrästen Kanälen (153) und ein Material auf Basis von Hochtemperaturkupfer und -nickel umfasst.

## Claims

1. A combined turbojet and ramjet engine comprising an outer casing (104), a central body (105) connected to said outer casing (104) by structural arms (107) and cooperating therewith to form an air inlet sleeve (101) and an air flow passage (103), and at least one first air compressor stage comprising a first turbine (122) arranged in said central body (105) and a first rotor (108) having blades (180) arranged in said air flow passage (103) and capable selectively of being driven by said first turbine (122) to operate the engine as a turbojet and of being feathered to operate the engine as a ramjet; the engine being **characterized in that** it further comprises a turbopump (129) comprising a pump (129A) that is fed with liquid hydrogen from a hydrogen tank (128) in order to inject the hydrogen into a heater (150) arranged in said outer casing (104) downstream from said central body (105) and a subsonic turbine (129B) driving said pump (129A), the turbine receiving the partially-expanded hydrogen collected at the outlet from the heater (150), the hydrogen that is partially expanded in the subsonic turbine (129B) being applied to said first turbine (122), which is a supersonic turbine, in order to operate the engine as a turbojet, the hydrogen from the first supersonic turbine (122) then being collected in first tubes (124, 125) inside said central body (105) to be sent to the combustion chamber (110) defined inside the casing (104) downstream from said central body (105), while the hydrogen that is partially expanded in the subsonic turbine (129B) is sent directly into said combustion chamber (110) by injectors (111) in order to operate the engine as a ramjet.

2. A combined engine according to claim 1, **characterized in that** it further comprises a second air compressor stage comprising a second supersonic turbine (122) arranged in said central body (105) and a second rotor (109) having contrarotating blades (190) arranged in said air flow passage (103) and capable selectively of being driven by said second turbine (123) in order to operate the engine as a turbojet and of being feathered in order to operate the engine as a ramjet, said second turbine (123) also receiving the hydrogen that has been partially expanded in the subsonic turbine (129B), and the hydrogen from the second supersonic turbine (125) then being collected in second tubes (126) inside said central body (105) in order to be sent to said combustion chamber (110) in order to operate the engine as a turbojet.

3. A combined engine according to claim 1, **characterized in that** it includes means for taking a fraction of the hydrogen from the first supersonic turbine (122), means for introducing this hydrogen fraction into first internal channels formed inside the blades (180) of the first rotor (108), and means for exhausting this hydrogen fraction to said combustion chamber (110) via said first tubes (124, 125) after passing along said first internal channels.

4. A combined engine according to claims 1 to 3, **characterized in that** it further includes means for taking a fraction of the hydrogen coming from the second supersonic turbine (123), means for introducing this hydrogen fraction into second internal channels formed inside the blades (190) of the second rotor (109), and means for exhausting this hydrogen fraction to said combustion chamber (110) via said second tubes (126) after passing through said second internal channel.

5. A combined engine according to any one of claims 1 to 4, **characterized in that** it includes a post-combustion device with flame-holder rings (112, 112A) arranged in said combustion chamber (110) between a rear portion (106) of the central body (105) and a portion (113) of the outer casing (104) containing said heater (150).

6. A combined engine according to any one of claims 1 to 5, **characterized in that** the heater (150) includes a heat exchanger having regenerating walls (151) and fins (152).

7. A combined engine according to claim 6, **characterized in that** the heater (150) comprises a heat exchanger having walls (151) with milled channels (153) made of a material based on copper or on high-temperature nickel.
